# EUROPEAN PATENT APPLICATION

(11) **EP 1 223 424 A1**
(43) Date of publication of application: **17.07.2002**
(21) Application number: 00954998.1
(22) Date of filing: 24.08.2000
(51) Int. Cl.: G01N 25/16

(54) **DESKTOP THERMAL LENS MICROSCOPE**

(30) Priority: 25.08.1999 JP 23895099
(71) Applicant: KANAGAWA ACADEMY OF SCIENCE AND TECHNOLOGY, Kanagawa 213-0012 (JP)
(72) Inventor: KITAMORI, Takehiko, Bunkyo-ku Tokyo 113-0033 (JP); TOKESHI, Manabu, Tama-ku, Kawasaki-shi, Kanagawa 214-0021 (JP); TSUNEMI, Ryo, Yodogawa-ku Osaka-shi Osaka 532-0 (JP)
(74) Representative: Power, Philippa Louise (GB)
(86) International application number: JP0005716
(87) International publication number: WO0114863

(57) **Abstract**

A desktop thermal lens microscope apparatus for detecting a chemical reaction in a micro spatial region within a glass chip, or the like, more conveniently at any given place. The desktop thermal lens microscope apparatus comprises small laser light sources such as semiconductor lasers as an excitation light source and a probe light source. Since an excitation light source system (P) , a probe light source (Q), and a thermal lens microscope optical system (R, S, T) are integrally provided in a single housing the size of the desktop thermal lens microscope is as small as that of a desktop microscope.

## Description

### Technical Field

The invention of this application relates to a desktop thermal lens microscope. More particularly, the invention of this application concerns a desktop thermal lens microscope that enables high-precision analysis of ultra-fine particles within a micro spatial region, that is of a desktop type, and that enables simple and easy measurement at any given place.

### Background Art

In the research and development of, and in the manufacture of devices or apparatus relevant to, the high scientific technology that handles micro order analyses of such as a semiconductor, living body, or functional material, there has been an increasing demand for the improvement in the integrated techniques for a chemical reaction that are utilized for enabling a chemical reaction to be made in a micro spatial region such as that on a glass chip or the like and for enabling the results thereof to be used for analyses or the like. In view of the merits such as the high-speed property of a chemical reaction, a minute quantity of necessary specimens, etc., such integrated technique can be expected to enable on-site analyses to be made over a wider area. Under such circumstances, the worldwide research and study on it have now gone on being performed. If it becomes possible to execute absorbance analyses within a micro spatial region with a smaller size of analyzing appliance, as a result of the scale merit that the system has been integrated, the flexibility of the analyzing operation is expected to increase by leaps and bounds. Resultantly, conversion of the chemico-analytical system to an efficient and generally available integrated version has been expected to be realized.

Meanwhile, optical-to-thermal conversion light absorbance analyzers each of that is based on the thermal-lens effect that is produced due to the light absorption in a specimen in a liquid have been researched, studied and developed by the inventors of this application. A lot of fruitful results regarding the improvement of the conventional techniques have thereby been obtained and, as a result, such improved analyzers have found their way to being put to practical use. On the other hand, regarding the conversion to a compact size of the optical-to-thermal conversion light absorbance analyzer utilizing this thermal-lens effect, it has indeed been studied and developed locally at a laboratory level. However, these studies have been performed for the purpose of making a limited range of analyses. On the other hand, for the optical-to-thermal light absorbance analyzers widely available, a gas laser has widely been used as the excitation light source and probe light source thereof. Also, regarding the optical system in each of the measuring part and detecting part (photo-electric conversion part), complicated up-version of the system, which is made on a basis of optics, has been configured. Therefore, the analyzers have each been large in size and had a low level of portability, and this has become a factor for limiting the places of execution of the analytical experiments utilizing this optical-to-thermal conversion light absorbance analyzer. Since the optical-to-thermal light absorbance analyzer that utilizes the thermal-lens effect has a lot of merits such as that the objects analyzable are wide, the conversion thereof to a high-availability miniaturization, especially to a desktop type has strongly been expected to be realized.

The invention of this application has been made in view of the above-mentioned circumstances and has an object to provide a desktop thermal lens microscope that is made small in size to such an extent as in the case of the desktop type microscope and that enables the detection of a chemical reaction within a glass chip or the like to be performed at any given place and in a simpler and easier way.

### Disclosure of the Invention

As means for solving the above-described problems, the invention of this application provides a desktop thermal lens microscope, the desktop thermal lens microscope apparatus being a thermal lens microscope that is arranged to have a construction wherein an excitation light and a probe light are entered into an optical microscope; and the probe light is entered into a thermal lens formed by the irradiation of the excitation light into a specimen, whereby the detection of substances in the specimen is performed by measuring the diffusion of the detecting light resulting from the action of the thermal lens, which is characterized in that the apparatus is equipped with small-sized laser light sources serving, respectively, as an excitation light source and a probe light source; and the excitation light source, the probe light source, and a thermal lens microscope optical system are integrated together in a single housing.

Also, the invention of this application provides a desktop thermal lens microscope as modified from the above-described desktop thermal lens microscope that is characterized by being equipped with a chopper in order to perform lock-in amplifier signal processing and with a modulation mechanism that performs PLL control of the drive of the chopper and that thereby performs modulation of the excitation light, and a desktop thermal lens microscope apparatus as modified from the above-described desktop thermal lens microscope that is characterized by being equipped with a diffraction grating by means of which the probe light and the excitation light are separated from each other to thereby extract only the probe light alone.

Further, the invention of this application provides a method for performing a chemical analysis that is characterized by including a step of performing a chemical analysis of a very small value of quantity in a micro spatial region on a chip with the use of one of the desktop thermal lens microscope.

### Brief Description of Drawings

Fig. 1 is a view illustrating a construction example of a thermal lens microscope micro-quantity analyzer apparatus according to the invention of this application; and
Fig. 2 is a further detailed optical system block diagram of the apparatus example of Fig. 1.

It is to be noted that the symbols in the Figures represent the following.
- P: excitation light source system
- Q: probe light source system
- R: objective lens system
- S: condenser lens system
- T: light receiving system
- 1: excitation light source
- 2: chopper
- 3: beam expander
- 4: probe light source
- 5: collimator lens
- 6: dichroic mirror
- 7: beam splitter
- 8: objective lens
- 9: specimen chip
- 10: condenser lens
- 11: mirror
- 12: condenser lens
- 13: aperture
- 14: interference filter
- 15: pin hole
- 16: photodetector
- 17: dichroic mirror

### Best Mode for Carrying out the Invention

In the present invention of this application, as described above, by the small-sized laser light sources being equipped as the excitation light source and probe light source and by the excitation light source, probe light source and thermal lens microscope optical systembeing integrated together into a single housing, there is realized a desktop thermal lens microscope apparatus with a compact size of mechanism.

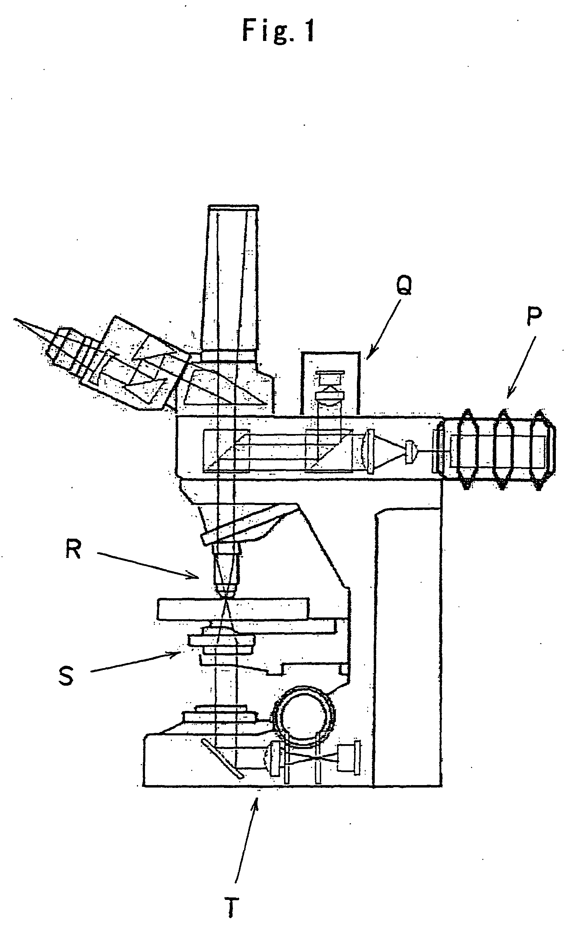

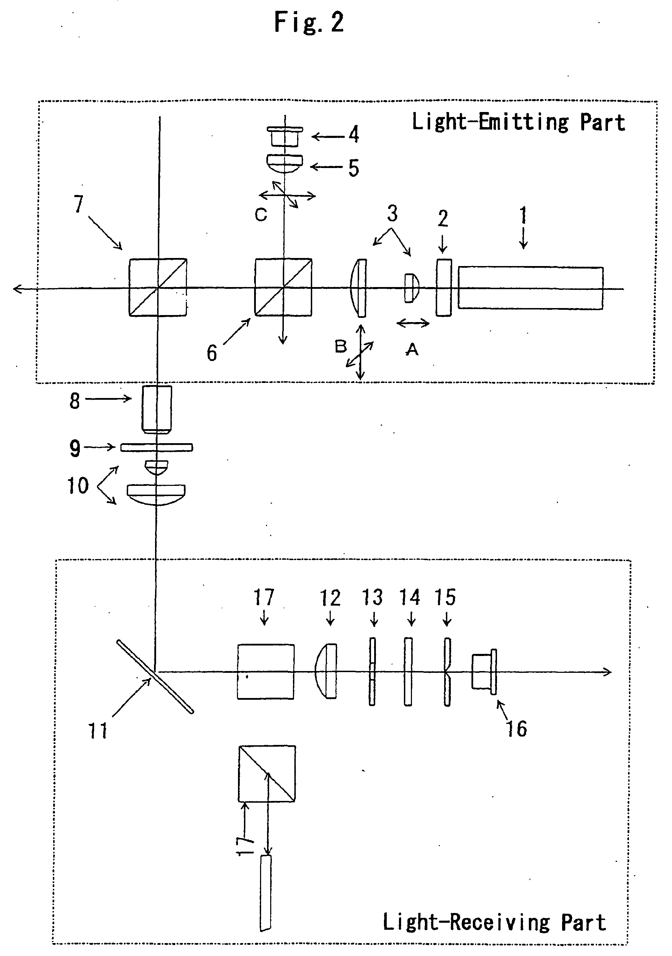

Figs. 1 and 2 are respectively optical system block diagrams each illustrating a construction example of a desktop thermal lens microscope apparatus according to the invention of this application.

In the desktop thermal lens microscope according to the invention of this application, as illustrated in Fig. 1, all components are integrated together into a single housing as in the case of the desktop type microscope.

The components in this case basically include, together with an excitation light source system (P) and a probe light source system (Q), an objective lens system (R) serving as the microscope optical system, a condenser lens system (S), and a light receiving system (T).

It is to be noted that, in the present invention, the wording "a single housing" does not means that the vessel in which the above-mentioned components are disposed is limited to being a component that is originally unitary as a constituent element of the microscope apparatus.

Accordingly, the wording "a single housing" means a component that is conceptually flexible and within that a plurality of parts (portions) are not disposed in the way of their spatial positions being separated from each other.

Accordingly, the components such as the excitation light source system (P), probe light source system (Q), or light receiving system (T) need only to be integrated and connected together by means of a screwing structure, hanging structure, fitting structure, or sliding structure.

On this account, explaining this about a concrete example in more detail by the use of Fig. 2, the excitation light is output from the excitation light source (1). As the excitation light source (1), there are used various types of small-sized laser light sources including a semiconductor laser-pumped solid laser and a gas laser as well as a small-sized semiconductor laser. The excitation light that has been output from the excitation light source (1) is modulated by a chopper (2) and, further, is emitted as plane waves by a beam expander (3). In the desktop thermal lens microscope apparatus according to the invention of this application, suitably, it is equipped with a chopper in order to cause signal processing to be performed by a lock-in amplifier, the drive of that is PLL-controlled, whereby the excitation light is modulated. The beam expander (3) enables collimation adjustment in the directions of A. In addition, the beam expander (3) enables bi-axial centering in the directions of B.

On the other hand, as in the case of the excitation light source (1), the probe light that has been output from a probe light source (4) serving as the small-sized laser light source is emitted as parallel light-ray beams from a collimator lens (5). Thereafter, they are composed, on the same axis, together with the excitation light, by means of a dichroic mirror (6). The probe light can be subjected to centering adjustment through the bi-axial movement of the collimator lens (5). The excitation light and the probe light differ in wavelength from each other and, here, it is assumed that the wavelength of the probe light be larger than that of the excitation light.

The composite light consisting of the excitation light and the probe light is reflected by a beam splitter (7) to pass through an objective lens (8), and the resulting light is radiated onto a specimen chip (9) placed on a stage. In the interior of the specimen, a thermal lens is formed, due to the occurrence of optical-to-thermal conversion phenomena, through the action of part of the excitation light constituting the composite light. On the other hand, the probe light that has passed through the thermal lens is diffused and, together with the excitation light having irrelevancy to the optical-to-thermal conversion, passes through the specimen. Saying from the viewpoint of principle, the excitation light is also affected by the thermal lens. However, it is much less affected than the probe light. In order to make the apparatus small in size, the stage is disposed adjacently to the objective lens and its position is made fixed.

The transmission light from the specimen chip (9), after having had its optical axis adjusted by the condenser lens (10), is input, through the action of a mirror (11), into a dichroic mirror (17), as parallel light. Through the action of the dichroic mirror (17), the components having the wavelength of the excitation light are reflected, whereby the components the wavelength of that is greater than that of the probe light are passed it. The resulting transmission light is contracted by a condenser lens (12) that has been so set that it may be imaged at a pinhole (15), then is passed through an aperture (13), and then is input into an interference filter (14). In the interference filter (14), only the probe light alone is passed through it, then is passed through the pinhole (15), and then is input into a photo-detector (16) and is thereby converted to an electric signal. The electric signal is input to a lock-in amplifier and, jointly with a reference signal from a chopper controller for controlling the chopper (2), is measured. The signal that is output from the lock-in amplifier and that represents the measured result is input into a computer. The analysis of the specimen chip (9) is performed therein.

In the thermal lens microscope apparatus according to the invention of this application, the light-ray optical system is integrated into a singlehousing. For this reason, the vibration noises are reduced while, on the other hand, highly efficient utilization of the excitation light output becomes possible with the construction of that optical system to thereby achieve the reduction of a stray light.

As a result of this, the S/N ratio is improved. Also, the use of the chopper enables the procurement of positional information of a thermal lens signal as well as the improvement in the precision of the lock-in amplifier processing.

Incidentally, regarding the light sources, the wavelength may be optional, and the small-sized laser light sources such as semiconductor laser or the like may each be replaceable.

Further, in addition, in the desktop thermal lens microscope apparatus according to the present invention, using a diffraction grating, it is also possible to separate the probe light and the excitation light from each other and to extract only the probe light alone. In the case of using a filter, that noises remain in the probe light has hitherto become problematic. However, by using a diffraction grating, it becomes possible to increase the detection sensitivity (S/N) with the noises being kept low to thereby increase the detection precision of an object to be measured.

The invention of this application has the above-described characterizing features. Then an embodiment will now be shown below and the invention will be explained in more detail. Embodiment

The desktop thermal lens microscope apparatus illustrated in Figs. 1 and 2 were trial-manufactured and quantitative analysis of nitrogen oxides (NO, NO₂) was conducted.

Regarding the trial-manufactured desktop thermal lens microscope apparatus, for the excitation light there was used a semiconductor YAG laser (second harmonics) the wavelength of that was 532 nm and the output of that was 100 mW. For the probe light, there was used a semiconductor laser the wavelength of that was 680 nm and the output of that was 5 mW. In order to make the modulated frequency stable, PLL control was performed on a drive circuit for driving the chopper.

Regarding the quantitative analysis of the nitrogen oxides, there was used an alkaline (pH 13) aqueous solution of hydrogen peroxide, into which nitrogen oxide in a tobacco smoke was oxidized and absorbed as nitrous acid ions. The resulting solution was reacted with N-1-naphthyl ethylenediamine that is a color-producing reagent and was thereby rendered reddish-purple (having a peak absorbance wavelength of 545 nm). And the resulting solution was introduced into channels within a glass chip, whereby detection thereof was performed using the thermal lens microscope. It is to be noted that the modulated frequency obtained by the chopper was 937 Hz.

As a result of this, the quantitative analysis of nitrogen oxides could be performed in the same way as in the case of the conventional thermal lens microscope apparatus. It is thought that the trial-manufactured thermal lens microscope apparatus (W30 x D50 x H50 (cm)) has been made sufficiently small in size as compared with the conventional thermal lens microscope apparatus (W150 x D100 x H80 (cm)).

Also, when the apparatus has been miniaturized, the excitation light source, probe light source, and thermal lens microscope optical system have been integrated together. By doing so, it has been possible to obtain the effect of mitigating the external noises such as vibration noises, with the result that a desktop thermal lens microscope apparatus which when measuring with use of it exhibits high resistance to environment has been realized.

### Industrial Applicability

Through the invention of this application, an ultra-fine-quantity analyzing microscope that is small in size and portable and that has excellent resolving power and quantitative-analysis capability is realized. With the desktop thermal lens microscope apparatus of the invention according to this application, it becomes possible to execute chemical analyses in a micro region and, through the additional merits such as that chemical reactions proceed at high speed, that necessary specimens are very small in quantity, etc., the flexibility of the analyzing operations is being expected to take a great leap forward, thereby it is being expected that an efficient and widely available level of integrated version of the chemico-analytical system is realized.

## Claims

1. A desktop thermal lens microscope apparatus, the desktop thermal lens microscope apparatus being a thermal lens microscope that is arranged to have a construction wherein an excitation light and a probe light are entered into an optical microscope; and the probe light is entered into a thermal lens formed by the irradiation of the excitation light into a specimen, whereby the detection of substances in the specimen is performed by measuring the diffusion of the probe light resulting from the action of the thermal lens, the desktop thermal lens microscope apparatus being **characterized in that** the apparatus is equipped with small-sized laser light sources serving, respectively, as an excitation light source and a probe light source; and the excitation light source, the probe light source, and a thermal lens microscope optical system are integrated together in a single housing.

2. A desktop thermal lens microscope according to claim 1, **characterized by** being equipped with a chopper in order to perform lock-in amplifier signal processing and with a modulation mechanism that performs PLL control of the drive of the chopper and that thereby performs modulation of the excitation light.

3. A desktop thermal lens microscope apparatus according to claim 1, **characterized by** being equipped with a diffraction grating by means of which the probe light and the excitation light are separated from each other to thereby extract only the probe light alone.

4. A method for performing a chemical analysis, **characterized by** including a step of performing a chemical analysis of a very small value of quantity in a micro spatial region on a chip with the use of the desktop thermal lens microscope according to any one of claims 1 to 3.
